# EUROPEAN PATENT SPECIFICATION

(11) **EP 2 429 315 B1**
(45) Date of publication and mention of the grant of the patent: **20.12.2017**
(21) Application number: 10716231.5
(22) Date of filing: 27.04.2010
(51) Int. Cl.: A23P 30/36, A23L 7/187, A23L 5/10

(54) **METHOD FOR PREPARING PUFFED CAKES USING A ROTARY COOKER**
HERSTELLUNG VON GEPUFFTEN PLÄTZCHEN UNTER VERWENDUNG EINES DREHOFENS
PROCÉDÉ POUR PRÉPARER DES GÂTEAUX SOUFFLÉS À L'AIDE D'UN CUISEUR ROTATIF

(30) Priority: 11.05.2009 US 463673
(43) Date of publication of application: 21.03.2012
(60) Divisional application: 17201645.3
(73) Proprietor: The Quaker Oats Company, Chicago, IL 60661 (US)
(72) Inventor: MOORE, Gary, McHenry, IL 60050 (US); KHAN, Norman, Carol Stream, IL 60188 (US); YACU, Waleed, Vernon Hills, IL 60061 (US)
(74) Representative: Jenkins, Peter David
(86) International application number: PCT/US2010/032525
(87) International publication number: WO 2010/132198

(56) References cited:
- CN-A- 1 173 297
- CN-A- 1 173 297
- CN-A- 101 190 005
- CN-A- 101 190 005
- GB-A- 491 571
- GB-A- 663 232
- GB-A- 663 232
- JP-A- H05 192 083
- JP-A- H05 192 083
- US-A- 3 650 763
- US-A- 3 650 763
- US-A- 5 240 728
- US-A1- 2003 008 049
- US-A1- 2005 025 867
- US-A1- 2005 153 045

## Description

### FIELD OF THE INVENTION

The present invention relates generally to the preparation of puffed cakes. More particularly, the present invention relates to a method for preparing a puffed non-waxy grain cake with a natural appearance, using a rotary cooker.

### BACKGROUND

In today's society, obesity, high cholesterol, and high blood pressure are health concerns on the minds of the vast majority of consumers. As a result of these health concerns, there exists a need for food and beverage manufacturers to provide consumers with healthy meal and snack options. One food group in particular, whole grains, may be consumed to address these concerns. Studies have found the following health benefits may be associated with the consumption of whole grains: reducing the risk of heart disease by decreasing cholesterol levels, blood pressure and blood coagulation; reducing the risk of many types of cancer; regulating blood glucose in diabetic individuals; and experiencing staying "fuller" for a longer period of time after consuming a comestible (i.e., satiety). The invention described herein provides the consumer with a healthy snack option-a puffed whole grain cake.

Products that have a natural, simple appearance are also becoming more important to consumers. Currently, whole grains are added to rice cakes at very low levels (less than 15%) because the addition of higher levels of these ingredients reduces puffing and creates a dense, unappealing rice cake. One method used in the food industry to overcome the puffing problems caused by using higher levels of grains, include pre-gelatinizing the starch component of the ingredient in an extruder. However, the extruder plasticizes the grains and destroys the non-homogeneity of the components (i.e., the grain). Therefore, a need exists in the food industry for a method of providing a consumer with a whole grain snack that contains higher levels of grains compared to traditional cakes, while maintaining the cake's non-homogenous appearance.

US-A-2003/0008049 discloses grain processing in a rotary cooker in which a waxy grain is gelatinized throughout, and the cooked grain is bumped in a roller mill to a desired thickness of 0.0508 to 0.1524 mm (0.002 to 0.006 inch). The rolled grain product can be puffed.

US-A-2005/0153045 discloses the production of a puffed cake. A starchy farinaceous composition is cooked and the cooked product is formed in a cold forming extruder into the desired shape or form, or is formed directly from a cooker extruder, and the extruded-formed pieces or shapes are dried to a final moisture. These pieces or shapes are flash fried. The resultant fried product, after cooling, can finally be expanded by a subsequent heating step, for example in a rice cake forming machine. Therefore any puffing step is only carried out on a product which has been cooked, extruded and then fried.

The method described herein provides for gelatinization of the whole grain, without destroying the non-homogeneity of the whole grain, thereby producing a natural-looking cake that is more appealing to consumers. The present invention is directed towards satisfying the need that exists in the field for natural-appearing puffed cakes. Moreover, the present invention prepares a puffed cake in less time and with lower drying costs as compared to traditional methods of producing a puffed cake. Additionally, by including oats in the method of the present invention, the nutritional value of the cake is greater in comparison to a rice cake, thereby providing the consumer with a healthier snack alternative.

Currently, rice cakes are made by popping raw grains, by pre-steaming the grains to moisten and partially gelatinize the starch and subsequently popping, or by pre-cooking whole grain flours in an extruder and forming pellets that are subsequently popped. While rice cakes from raw or steamed rice puff well in a rice cake machine, other whole grains, such as oats, do not. When an extruder is used to fully gelatinize whole grains, the plasticization of the grains destroys the non-homogeneity of the whole grain components. Therefore, while extruded whole grains will puff well in a rice cake machine, the finished product has a homogeneous, non-natural, unappealing appearance. The invention described herein provides greater gelatinization of starches than steaming alone and a similar level of starch gelatinization as extrusion, without destroying the non-homogeneity of the whole grain.

The method of preparing puffed cakes, as described herein, is advantageous in that it provides a more appealing product than can be produced by traditional methods of preparing puffed cakes. Additionally, this method of preparing puffed cakes allows the manufacturer to operate its rice cake popping machines at shorter bake times thereby lowering costs and improving popping productivity by 10-20% over conventionally steamed grains. This method of preparing cakes also provides longer product shelf-life. The method of preparing cakes as described herein can be completed by introducing whole grains into a rotary cooker, cooking, drying and puffing the product.

The present invention is directed toward satisfying the need that exists in the field, for healthy, natural, and natural-appearing snack products. Additionally, a food-grade ingredient may be included in the method of preparing the cakes, thereby providing the consumer with additional options for a healthy snack.

### BRIEF SUMMARY

The present invention relates to a method for preparing a puffed cake according to claim 1. It was discovered that the cake produced by the method described herein has a natural-looking, non-homogeneous appearance. In one aspect of the present invention, in accordance with claim 1, grain is introduced into a rotary cooker, cooked, dried and subsequently puffed into a desired form. Preferred features are defined in the dependent claims.

### DETAILED DESCRIPTION OF THE INVENTION

The present invention relates to grain cakes cakes. In particular, the present invention relates to a method for preparing a puffed cake by cooking the whole grain in a rotary cooker. As used herein, "puffed," "puffing," or "puff" means puffing, popping, or otherwise expanding the grain.

In accordance with one aspect of the present invention, whole grains are first introduced into a rotary cooker. The grains are subsequently cooked using steam and water in a rotary cooker for a cycle time of about 30-90 minutes, which includes reaching a cooking temperature and pressure of about 121°C-138°C (250°-280°F), and about 103-172kPa (15-25 psi), respectively. The rotary cooker is typically operated at about 1-5 rpm. The grain is cooked at the target temperature and pressure for about 15-60 minutes. In one aspect of the invention, the grains are cooked in the rotary cooker to 20-50% moisture. Any food-grade rotary cooker may be used in accordance with the present invention, such as the Lauhoff Model LC 91 Serial 9307. Following cooking, the grains are dried to 10-17% moisture, for example 13-17% moisture, generally for about 45-120 minutes. Techniques that may be used to dry the grains may include, but are not limited to convection oven drying at about 77°C-104°C (170°-220°F) for about 45-120 minutes. Lastly, the grains are puffed into a rice cake form. In one aspect of the present invention, the grains are puffed using traditional rice cake popping machines. For example, the Lite Energy Rice Cake Machine may be used to puff the cakes, at a temperature range of 204°C-260°C (400°-500°F), a bake time of about 2-5 seconds, and a mold pressure (the internal pressure within the mold created by compressing the grain between the molding plates) of about 4,137-7,584kPa (600-1100 psi). As one of ordinary skill in the art of the food sciences would appreciate, the cooking conditions vary by grain, as lower cook times are needed for grains such as rice, corn, and wheat, whereas barley and oats require longer cook times for favorable gelatinization.

If the rotary cooked grains are to be stored for more than about 1 week prior to puffing, it is recommended that the grains be dried to reduce the water activity to less than about 0.6 prior to storage to prevent mold or bacterial contamination during storage. It is also recommended that the stored rotary cooked grains be soaked or steamed to 13-17% moisture prior to puffing in accordance with the method described above.

Although the grains used in accordance with the instant invention do not need to be fully gelatinized for puffing, certain grains such as oat and barley require further gelatinization than the gelatinization achievable using traditional steaming methods, thus necessitating the rotary cook method as described herein. It was also discovered that the degree of grain gelatinization in the cooker affects the degree of grain fusion (bond strength) when puffed. This discovery allows the manufacturer to maintain some level of control over the texture of the puffed grain cake. For instance, partially-gelatinized oats puffed into a cake results in poor fusion of the oats (causing the cake to break apart easily when bitten and chewed), whereas fully-gelatinized grains fuse well and provide a superior eating experience for the consumer.

The non-waxy whole grains used in accordance with the present invention include, but are not limited to oats, wheat, rice, corn, rye, and barley or combinations of these grains. Grains with various textures also may be used in accordance with the instant invention..

The puffed cakes prepared using the method described in this application have increased durability as compared to puffed cakes prepared using traditional methods known in the food industry. By pre-cooking the whole grains in a rotary cooker, the grains also exhibit improved fusion. Notable advantages associated with improved fusion and durability of the grains include easier consumption of the puffed cake with less mess, and less concern regarding breakage of the cakes during transportation and/or storage.

Food-grade ingredients may also be added to the grain product in another aspect of the present invention. For instance, during rotary cooking, a flavor may be introduced and/or infused into the grain. Following drying and puffing, the finished cake contains flavors incorporated into the grains of the cake. This flavor may compliment a topical coating or stand alone as a simple, more naturally-flavored puffed cake. Food-grade flavorings such as sugars, salts, and spices may be incorporated into the cake. The infusion of flavors may also be beneficial as a means of eliminating or masking strong bitter flavors that may develop during puffing of the whole grains. For example, sugar and barley malt may be used to mask bitter oat flavors. Other flavorings used may include cinnamon powder, Thermarome™ (Firmenich) honey flavoring and Durarome™ (Firmenich) Basil and Roasted Garlic Flavoring. In one aspect of the present invention, sugar is added to the grains and completely infused completely into the grain. This complete infusion is beneficial to prevent the grains from sticking in the puffing mold. Antioxidants are also more effective in preventing oxidation when they are infused into the grain instead of being dissolved into the outer surface of the grain.

As described herein, the present invention provides a method for preparing a puffed whole grain cake using a rotary cooker, resulting in beneficial attributes, while maintaining the structure of the whole grain throughout processing. Additionally, a flavored grain cake may be prepared in accordance with the present invention. Specific examples of the invention are as follows:

### Example 1

Step 1. Dissolve the sugar, malted barley extract, and salt in the water from Table A and then add ingredients in Table A to the rotary cooker.

**Table A**

| Ingredient | % of Formula | Kg per batch |
|---|---|---|
| | | (lbs per batch) |
| Oats | 85.970 | 39.03 |
| | | (85.97) |
| Sugar | 3.150 | 1.43 |
| | | (3.15) |
| Malted barley extract | 1.500 | 0.68 |
| | | (1.50) |
| Salt | 0.800 | 0.36 |
| | | (0.80) |
| Water | 8.500 | 3.86 |
| | | (8.50) |
| Mixed Tocopherol | 0.080 | 0.04 |
| | | (0.08) |
| Total | 100.000 | 45.40 |
| | | (100.00) |

Step 2. Cook mixture in preheated rotary cooker (Lauhoff Model LC 91 Serial 9307) for a cycle time of about 30-90 minutes with supply steam pressure at about 207-276 kPa (30-40 psi). Cycle time will include a ramp up of temperature and pressure inside the cooker. Final pressure and temperature should be at least 103 kPa (15 psi) and 121°C (250°F), respectively, and should be held at these conditions for about 5-25 minutes. This cooking cycle is followed by a 5 minute depressurization, 10 minute purge, and 5 minute depressurization to discharge. Resulting grain mixture should be 30-38% moisture.

Step 3. Dry grain mixture of Step 2 using Aeroglide Electric Batch oven. Depending on bed depth and beginning moisture, grains can be dried at 77°C-104°C (170°-220°F) for 45-120 minutes to reach desired moisture of less than 11%. Low moisture is needed for safe storage of grains, specifically mold growth prevention. If grains are not going to be stored before puffing, moisture should be reduced to about 15%, but tempering is necessary to allow moisture to equilibrate throughout the batch.

Step 4. If grains have been stored, grains must be soaked or steamed to achieve a moisture level of 13-17% before popping.

Step 5. Grains are popped into cakes using a Lite Energy Rice Cake Machine containing molds between 2.5cm and 5.1cm (1" and 2") in diameter. The machine is set to about 204°C-260°C (400°-500°F) on its top and bottom molds. The internal mold pressure is set to about 6,550kPa (950 psi). Bake time can range between 2 s and 5 s to achieve the desired expansion and texture.

### Example 2

Method described in Example 1, except using whole grain barley instead of oats.

### Example 3

Method described in Example 1, except using whole wheat instead of oats and reducing cook time to 30-60 minutes.

## Claims

1. A method for preparing puffed non-waxy grain cakes comprising the steps of:
a) introducing a non-waxy whole grain into a rotary cooker;
b) cooking the non-waxy whole grain with steam and water in the rotary cooker to 20-50% moisture;
c) drying the non-waxy whole grain to 10-17% moisture; and
d) puffing the non-waxy whole grain to form a puffed non-waxy whole grain cake.

2. The method of claim 1 wherein the non-waxy whole grain is selected from the group consisting of oats, wheat, rice, corn, barley and mixtures thereof.

3. The method of claim 1 wherein the puffed non-waxy whole grain cake has a natural appearance.

4. The method of claim 1 wherein the non-waxy whole grain is cooked in the rotary cooker to 25-38% moisture.

5. The method according to claim 1 further comprising:
adding at least one food-grade ingredient, preferably a flavor, to the rotary cooker.

6. The method of claim 5 wherein the flavor is selected from a group consisting of sugar, spice, chocolate barley malt, cinnamon powder, honey flavoring, garlic flavoring and mixtures thereof.

7. The method of claim 4 wherein the non-waxy whole grain is dried to 10-14% moisture.

## Patentansprüche

1. Verfahren zur Herstellung von gepufften nicht-wachsartigen Getreidewaffeln, das die folgenden Schritte umfasst:
a) Einbringen eines nicht-wachsartigen Vollkorngetreides in einen Drehgarer;
b) Garen des nicht-wachsartigen Vollkorngetreides mit Dampf und Wasser in dem Drehgarer zu einer Feuchtigkeit von 20-50 %;
c) Trocknen des nicht-wachsartigen Vollkorngetreides zu einer Feuchtigkeit von 10-17 % und
d) Puffen des nicht-wachsartigen Vollkorngetreides, um eine gepuffte nicht-wachsartige Vollkorngetreidewaffel zu bilden.

2. Verfahren nach Anspruch 1, wobei das nicht-wachsartige Vollkorngetreide aus der Gruppe bestehend aus Hafer, Weizen, Reis, Mais, Gerste und Gemischen davon aus gewählt ist.

3. Verfahren nach Anspruch 1, wobei die gepuffte nicht-wachsartige Vollkorngetreidewaffel ein natürliches Aussehen hat.

4. Verfahren nach Anspruch 1, wobei das nicht-wachsartige Vollkorngetreide in dem Drehgarer zu einer Feuchtigkeit von 25-38 % gegart wird.

5. Verfahren nach Anspruch 1, das weiterhin Folgendes umfasst:
Zugeben von mindestens einem Inhaltsstoff in Lebensmittelqualität, vorzugsweise einem Aroma, zu dem Drehgarer.

6. Verfahren nach Anspruch 5, wobei das Aroma aus einer Gruppe bestehend aus Zucker, einem Gewürz, Schokoladengerstenmalz, Zimtpulver, Honigaromastoff, Knoblaucharomastoff und Gemischen davon ausgewählt ist.

7. Verfahren nach Anspruch 4, wobei das nicht-wachsartige Vollkorngetreide zu einer Feuchtigkeit von 10-14 % getrocknet wird.

## Revendications

1. Procédé pour préparer des gâteaux soufflés à grains non cireux comprenant les étapes consistant à :
a) introduire des grains entiers non cireux dans un cuiseur rotatif ;
b) faire cuire les grains entiers non cireux à la vapeur et à l'eau dans un cuiseur rotatif sous une humidité de 20 à 50 % ;
c) faire sécher les grains entiers non cireux sous une humidité de 10 à 17 % ; et
d) lever les grains entiers non cireux pour former un gâteau soufflé à grains entiers non cireux.

2. Procédé selon la revendication 1, dans lequel les grains entiers non cireux sont choisis dans le groupe comprenant de l'avoine, du blé, du riz, du maïs, de l'orge et des mélanges de ceux-ci.

3. Procédé selon la revendication 1, dans lequel le gâteau soufflé à grains entiers non cireux présente une apparence naturelle.

4. Procédé selon la revendication 1, dans lequel les grains entiers non cireux sont cuits dans un cuiseur rotatif sous une humidité de 25 à 38 %.

5. Procédé selon la revendication 1, consistant en outre à :
ajouter au moins un ingrédient de qualité alimentaire, de préférence un arôme, dans le cuiseur rotatif.

6. Procédé selon la revendication 5, dans lequel l'arôme est choisi dans un groupe comprenant du sucre, des épices, du malte d'orge chocolaté, de la poudre de cannelle, de l'aromatisant de miel, un aromatisant d'ail et des mélanges de ceux-ci.

7. Procédé selon la revendication 4, dans lequel les grains entiers non cireux sont séchés sous une humidité de 10 à 14 %.
